# EUROPÄISCHE PATENTSCHRIFT

(11) **EP 2 384 354 B1**
(45) Veröffentlichungstag und Bekanntmachung des Hinweises auf die Patenterteilung: **20.02.2013**
(21) Anmeldenummer: 09768097.9
(22) Anmeldetag: 15.12.2009
(51) Int. Cl.: C08L 25/06

(54) **ELASTISCHER PARTIKELSCHAUMSTOFF AUF BASIS VON POLYOLEFIN/STYROLPOLYMER-MISCHUNGEN**
ELASTIC PARTICLE FOAM BASED ON POLYOLEFIN/STYRENE POLYMER MIXTURES
MOUSSE PARTICULAIRE ÉLASTIQUE À BASE DE MÉLANGES DE POLYOLÉFINE ET DE POLYMÈRE STYRÈNE

(30) Priorität: 30.12.2008 EP 08173086
(43) Veröffentlichungstag der Anmeldung: 09.11.2011
(73) Patentinhaber: BASF SE, 67056 Ludwigshafen (DE)
(72) Erfinder: SCHIPS, Carsten, 67342 Speyer (DE); HAHN, Klaus, 67281 Kirchheim (DE); HOFMANN, Maximilian, 68167 Mannheim (DE); RUCKDÄSCHEL, Holger, 67487 St Martin (DE); AßMANN, Jens, 68165 Mannheim (DE); JANSSENS, Geert, 67159 Friedelsheim (DE); GRÄßEL, Georg, 67063 Ludwigshafen (DE); LAMBERT, Jürgen, 67377 Gommersheim (DE); ZYLLA, Christof, 67117 Limburgerhof (DE)
(86) Internationale Anmeldenummer: PCT/EP2009/067138
(87) Internationale Veröffentlichungsnummer: WO 2010/076184

(56) Entgegenhaltungen:
- WO-A1-2009/112549
- DE-T5-112005 000 818

## Beschreibung

Die Erfindung betrifft expandierbare, thermoplastische Polymerpartikel bestehend aus einer mehrphasigen treibmittelhaltigen Polymermischung mit mindestens einer kontinuierlichen Phase eines thermoplastischen Polymeren, wobei mindestens zwei verschiedene disperse Phasen P1 und P2 verteilt in der kontinuierlichen Phase vorliegen, sowie Verfahren zu ihrer Herstellung und Verwendung zur Herstellung von elastischen Partikelschaumstoffformkörpern.

Expandierbare Polymermischungen aus Styrolpolymeren, Polyolefinen und gegebenenfalls Lösungsvermittlern, wie hydrierte Styrol-Butadien-Blockcopolymeren, sind beispielsweise aus DE 24 13 375, DE 24 13 408 oder DE 38 14 783 bekannt. Die daraus erhältlichen Schaumstoffe sollen gegenüber Schaumstoffen aus Styrolpolymeren bessere mechanischen Eigenschaften, insbesondere eine bessere Elastizität und eine geringere Sprödigkeit bei tiefen Temperaturen, sowie eine Unempfindlichkeit gegenüber Lösungsmitteln, wie Essigester und Toluol, aufweisen. Das Treibmittelhaltevermögen und die Verschäumbarkeit der expandierbaren Polymermischungen zu niedrigen Dichten sind für die Verarbeitung jedoch nicht ausreichend.

Die WO 2005/056652 beschreibt Partikelschaumstoffformteile mit einer Dichte im Bereich von 10 bis 100 g/l, die durch Verschweißen von vorgeschäumten Schaumpartikeln aus expandierbaren, thermoplastischen Polymergranulaten erhältlich sind. Die Polymer Granulate enthalten Mischungen aus Styrolpolymeren und anderen thermoplastischen Polymeren und können durch Schmelzeimprägnierung und anschließender Druckunterwassergranulierung erhalten werden.

Des Weiteren sind elastische Partikelschaumstoffe aus expandierbaren Interpolymerpartikeln bekannt (z. B. US 2004/0152795 A1). Die Interpolymeren sind durch Polymerisation von Styrol in Gegenwart von Polyolefinen in wässriger Suspension erhältlich und bilden ein Interpenetrierendes Netzwerk aus Styropolymeren und Olefinpolymeren. Aus den expandierbaren Polymerpartikeln diffundiert das Treibmittel jedoch schnell heraus, so dass sie bei tiefen Temperaturen gelagert werden müssen und nur eine kurze Zeit eine ausreichende Verschäumbarkeit aufweisen.

Die WO 2005/092959 beschreibt nanoporöse Polymerschaumstoffe, die aus treibmittelhaltigen, mehrphasigen Polymermischungen mit Domänen im Bereich von 5 bis 200 nm erhältlich sind. Bevorzugt bestehen die Domänen aus einem durch Emulsionspolymerisation erhältlichen Kern-Schale-Teilchen, in denen die Löslichkeit des Treibmittels mindestens doppelt so hoch ist, als in den angrenzenden Phasen.

Aufgabe der vorliegenden Erfindung war es, expandierbare, thermoplastische Polymerpartikel mit geringem Treibmittelverlust und hohem Expansionsvermögen bereitzustellen, die zu Partikelschaumstoffen mit hoher Steifigkeit und gleichzeitig guter Elastizität verarbeitbar sind, sowie ein Verfahren zu deren Herstellung.

Demgemäß wurden die oben beschriebenen, expandierbaren thermoplastischen Polymerpartikel gefunden.

Der mittlere Durchmesser der dispersen Phasen der Polymermischung liegt in der Regel im Bereich von 1 bis 2000 nm.

In bevorzugten expandierbaren, thermoplastischen Polymerpartikeln besteht
a) die kontinuierliche Phase im wesentlichen aus Styolpolymeren,
b) die erste disperse Phase P1 im wesentlichen aus Polyolefinen und
c) die zweite disperse Phase P2 im wesentlichen aus einem Styrol-Butadien- oder Styrol-Isopren-Blockcopolymeren, einem thermoplastischen Polyurethan (TPU), einem Polystyrol-gepfropften Butadienpolymeren oder einem Kern-Schale-Teilchen mit einer Styrolpolymer-Schale.

Bevorzugte expandierbare, thermoplastische Polymerpartikel, enthaltend
45 bis 89,5 Gewichtsprozent eines Styrolpolymeren,
B1) 5 bis 20 Gewichtsprozent eines Polyolefins mit einem Schmelzpunkt im Bereich von 105 bis 140°C,
B2) 1 bis 15 Gewichtsprozent eines Polyolefins mit einem Schmelzpunkt unter 105°C,
C1) 3 bis 25 Gewichtsprozent eines Styrol-Butadien- oder Styrol-Isopren-Blockcopolymeren,
C2) 0,5 bis 5 Gewichtsprozent eines Styrol-Ethylen-Butylen-Blockcopolymeren,
D) 1 bis 15 Gewichtsprozent eines Treibmittels,
E) 0 bis 5 Gewichtsprozent eines Nukleierungsmittels,
enthalten,
wobei die Summe aus A) bis E) 100 Gew.-% ergibt und die Summe von C1) und C2) im Bereich von 3,5 bis 30 Gewichtsprozent liegt, weisen in der Regel die oben beschriebene Morphologie auf.

Besonders bevorzugt enthalten die expandierbaren, thermoplastischen Polymerpartikel,
55 bis 78,1 Gewichtsprozent eines Styrolpolymeren,
B1) 7 bis 15 Gewichtsprozent eines Polyolefins mit einem Schmelzpunkt im Bereich von 105 bis 140°C,
B2) 5 bis 10 Gewichtsprozent eines Polyolefins mit einem Schmelzpunkt unter 105°C,
C1) 6 bis 15 Gewichtsprozent eines Styrol-Butadien- oder Styrol-Isopren-Blockcopolymeren,
C2) 0,8 bis 3 Gewichtsprozent eines Styrol-Ethylen-Butylen-Blockcopolymeren,
3 bis 10 Gewichtsprozent eines Treibmittels,
0,1 bis 2 Gewichtsprozent eines Nukleierungsmittels.
wobei die Summe aus den Komponenten A) bis E) 100 Gew.-% ergibt.

Die Summe der Komponenten C1) und C2) liegt im Bereich von 3,5 bis 30 Gewichtsprozent, bevorzugt im Bereich von 6,8 bis 18 Gewichtsprozent.

Das Gewichtsverhältnis der Summe aus den Komponenten B1) und B2) zur Komponenten C2) liegt in den erfindungsgemäßen expandierbaren, thermoplastischen Polymerpartikeln bevorzugt im Bereich von 5 bis 70.

Das Gewichtsverhältnis der Komponenten C1) zu C2) liegt in den erfindungsgemäßen expandierbaren, thermoplastischen Polymerpartikeln bevorzugt im Bereich von 2 bis 5.

Besonders bevorzugt bestehen die erfindungsgemäßen expandierbaren Polymerpartikel im Wesentlichen aus den Komponenten A) bis E).

Besonders bevorzugt bestehen die expandierbaren, thermoplastischen Polymerpartikel aus einer mehrphasigen treibmittelhaltigen Polymermischung mit mindestens einer kontinuierlichen Phase und mindestens zwei in der kontinuierlichen Phase verteilten dispersen Phasen P1 und P2 , wobei
a) die kontinuierliche Phase im wesentlichen aus der Komponenten A,
b) die erste disperse Phase P1 im wesentlichen aus den Komponenten B1 und B2 und
c) die zweite disperse Phase P2 im wesentlichen aus der Komponente C1 bestehen.

Die Komponenten C2) bildet bevorzugt eine Phasengrenzfläche zwischen der dispersen Phase P1 und der kontinuierlichen Phase.

Die erfindungsgemäßen expandierbaren, thermoplastischen Polymerpartikel weisen bevorzugt eine Beschichtung, enthaltend ein Glycerinstearat, auf.

Als Komponente A) kommen Styrolpolymere, wie Standard (GPPS)- oder Schlagzähpolystyrol (HIPS) oder Styrol-Acrylnitril-Copolymere (SAN) oder Acrylnitril-Butadien-Styrol-Copolymere (ABS) in Betracht. Besonders bevorzugt werden Standard-Polystyroltypen mit gewichtsmittleren Molekulargewichten im Bereich von 120.000 bis 300.000 g/mol und einer Schmelzevolumenrate MVR (200°C/5 kg) nach ISO 113 im Bereich von 1 bis 10 cm³/10 min, beispielsweise PS 158 K, 168 N oder 148 G der BASF Aktiengesellschaft. Zur Verbesserung der Verschweißung der Schaumstoffpartikel bei der Verarbeitung zum Formteil können leichtfließende Typen, beispielsweise Empera® 156L (Innovene) zugesetzt werden

Als weitere Komponenten B) enthalten die expandierbaren thermoplastischen Polymerpartikel Polyolefine B1) mit einem Schmelzpunkt im Bereich von 105 bis 140°C und Polyolefine B2) mit einem Schmelzpunkt unter 105°C. Der Schmelzpunkt ist der mittels DSC (Dynamical Scanning Calorimetrie) bei einer Aufheizrate von 10°C/Minute ermittelte Schmelzpeak.

Als Polyolefin B1) wird bevorzugt ein Homo- oder Copolymerer von Ethylen und/oder Propylen mit einer Dichte im Bereich von 0,91 bis 0,98 g/L (bestimmt nach ASTM D792), insbesondere Polyethylen. Als Polypropylene kommen insbesondere Spritzgusstypen in Betracht. Als Polyethylene kommen kommerziell erhältliche Homopolymere aus Ethylen, wie PE-LD (Spritzgusstypen), -LLD, -HD, oder Copolymere aus Ethylen und Propylen (z. B Moplen® RP220 und Moplen® RP320 der Basell), Ethylen und Vinylacetat (EVA), Ethylenacrylate (EA) oder Ethylen-Butylen-Acrylate (EBA) in Frage. Der Schmelzevolumenindex MVI (190°C/2,16 kg) der Polyethylene liegt üblicherweise im Bereich von 0,5 bis 40 g/10 min, die Dichte im Bereich von 0,91 bis 0,95 g/cm³. Außerdem können Abmischungen mit Polyisobuten (PIB)(z. B. Oppanol® B150 der BASF Aktengesellschaft) eingesetzt werden. Besonders bevorzugt wird LLDPE mit einem Schmelzpunkt im Bereich von 110 bis 125°C und einer Dichte im Bereich von 0,92 bis 0,94 g/L eingesetzt.

Mit geringerem Anteil an Polyolefin B1) nimmt das Treibmittelhaltevermögen deutlich zu. Damit werden die Lagerfähigkeit und die Verarbeitbarkeit der expandierbaren, thermoplastischen Polymerpartikel deutlich verbessert. Im Bereich von 5 bis 20 Gew.-% Polyolefin erhält man expandierbare thermoplastische Polymerpartikel mit langer Lagerfähigkeit, ohne dass sich die elastischen Eigenschaften des daraus hergestellten Partikelschaumstoffs verschlechtern. Dies zeigt sich beispielsweise in einem geringern Entformungsrest εᵣₑₛₜ im Bereich von 25 bis 35 %.

Das Polyolefin B2) weist vorzugsweise eine Dichte im Bereich von 0,86 bis 0,90 g/L (bestimmt nach ASTM D792) auf. Hierfür eignen sich insbesondere thermoplastische Elastomere auf Basis von Olefinen (TPO). Besonders bevorzugt werden Ethylen-Octen-Copolymere, die beispielsweise im Handel unter der Bezeichnung Engage® 8411 von der Firma Dow erhältlich sind. Expandierbare, thermoplastische Polymerpartikel, die die Komponente B2) enthalten, zeigen nach der Verarbeitung zu Schaumstoffformteilen eine deutliche Verbesserung in der Biegearbeit und Reißfestigkeit.

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen.

Zur gezielten Einstellung der gewünschten Morphologie werden Verträglichkeitsvermittler (Komponenten C) eingesetzt. Eine Verbesserung der Verträglichkeit wird erfindungsgemäß durch die Verwendung einer Mischung von Styrol-Butadien- oder Styrol-Isopren-Blockcopolymeren als Komponente C1) und Styrol-Etylen-Butylen-Blockcopolymeren (SEBS) als Komponente C2) erreicht.

Die Verträglichkeitsvermittler führen zu einer verbesserten Haftung zwischen der Polyolefin-reichen und der Styrolpolymerreichen Phase und verbessern die Elastizität des Schaumstoffs schon in geringen Mengen deutlich gegenüber herkömmlichen EPS-Schaumstoffen. Untersuchungen zur Domänengröße der Polyolefin-reichen Phase zeigten, dass der Verträglichkeitsvermittler durch Reduktion der Grenzflächenspannung kleine Tröpfchen stabilisiert.

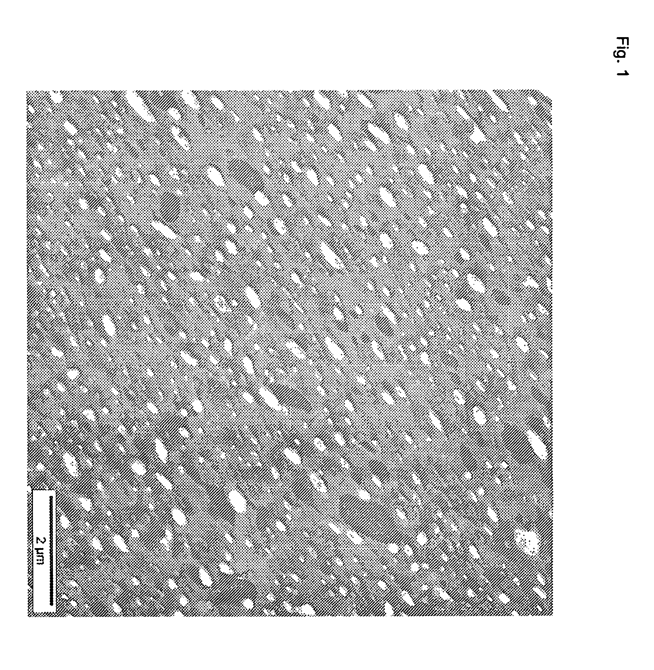

Figur 1 zeigt eine elektronenmikroskopische Aufnahme eines Schnittes durch ein treibmittelhaltiges, expandierbares Polystyrol/Polyethylen mit dispersen Polyethylendomänen in der Polystyrolmatrix.

Die expandierbaren, thermoplastischen Polymerpartikel enthalten als Komponente C1) 0,1 bis 9,9 Gewichtsprozent, insbesondere 1 bis 5 Gew.-% eines Styrol-Butadien- oder Styrol-Isopren-Blockcopolymeren.

Hierfür eignen sich beispielsweise Styrol-Butadien- oder Styrol-Isopren-Blockcopolymere. Der Gesamtdiengehalt liegt bevorzugt im Bereich von 20 bis 60 Gew.-%, besonders bevorzugt im Bereich von 30 bis 50 Gew.-%, der Gesamtstyrolgehalt liegt entsprechend bevorzugt im Bereich von 40 bis 80 Gew.-%, besonders bevorzugt im Bereich von 50 bis 70 Gew.-%.

Geeignete Styrol-Butadien-Blockcopolymere, welche aus mindestens zwei Polystyrolblöcken S und mindestens einem Styrol-Butadien-Copolymer-Block S/B bestehen, sind beispielsweise sternförmig verzweigte Blockcopolymere, wie sie in EP-A 0654488 beschrieben sind.

Des Weiteren eignen sich Blockcopolymere mit mindestens zwei Hartblöcken S₁ und S₂ aus vinylaromatischen Monomeren mit mindestens einem dazwischen liegenden statistischen Weichblock B/S aus vinylaromatischen Monomeren und Dien, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO 00/58380 beschrieben sind.

Als Verträglichkeitsvermittler sind auch lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. geeignet. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 bis 16 %.

Als Verträglichkeitsvermittler werden bevorzugt Styrol-Butadien-Styrol (SBS) Dreiblockcopolymere mit einem Butadiengehalt von 20 bis 60 Gew.-%, bevorzugt 30 bis 50 Gew.-%, welche hydriert oder nicht hydriert sein können, verwendet Diese sind beispielsweise unter der Bezeichnung Styroflex® 2G66, Styrolux® 3G55, Styroclear® GH62, Kraton® D 1101, Kraton® D 1155, Tuftec® H1043 oder Europren® SOL T6414 im Handel. Dabei handelt es sich um SBS-Blockcopolymerer mit scharfen Übergängen zwischen B- und S-Blöcken.

Als Komponente C2) enthalten die expandierbaren, thermoplastischen Polymerpartikel 0,1 bis 9,9 Gewichtsprozent, insbesondere 1 bis 5 Gew.-% eines Styrol-Etylen-Butylen-Blockcopolymeren (SEBS). Geeignete Styrol-Etylen-Butylen-Blockcopolymere (SEBS) sind beispielsweise solche, die durch Hydrierung der olefinischen Doppelbindungen der Blockcopolymeren C1) erhältlich sind. Geeignete Styrol-Ethylen-Butylen-Blockcopolymere sind beispielsweise die im Handel erhältlichen Kraton® G Typen, insbesondere Kraton® G 1650.

Des weiteren können der mehrphasigen Polymermischung Additive, Keimbildner, Weichmacher, Flammschutzmittel, lösliche und unlösliche anorganische und/oder organische Farbstoffe und Pigmente, Füllstoffe oder Cotreibmittel in Mengen zugesetzt werden, die die Domänenbildung und daraus resultierende Schaumstoffstruktur nicht beeinträchtigen.

Als Komponente E) enthalten die expandierbaren, thermoplastischen Polymerpartikel 0 bis 5 Gewichtsprozent, bevorzugt 0,3 bis 3 Gewichtsprozent eines Keimbildner oder Nukleierungsmittel, beispielsweise Talkum.

Als Treibmittel (Komponente D) enthalten die expandierbaren, thermoplastischen Polymerpartikel 1 bis 15 Gewichtsprozent, bevorzugt 3 bis 10 Gewichtsprozent, bezogen auf die Komponenten A) bis E), eines physikalischen Treibmittels, wie aliphatischen C₃ bis C₈-Kohlenwasserstoffen, Alkoholen, Ketonen, Ethern oder halogenierten Kohlenwasserstoffen eingesetzt. Bevorzugt wird iso-Butan, n-Butan, iso-Pentan, n-Pentan.

Geeignete Cotreibmittel sind solche mit einer geringeren Selektivität der Löslichkeit für die Domänen bildenden Phase, beispielsweise Gase wie CO₂, N₂, Fluorkohlenwasserstoffe oder Edelgase. Diese werden bevorzugt in Mengen von 0 bis 10 Gew.-%, bezogen auf die expandierbaren, thermoplastischen Polymerpartikel eingesetzt.

Die Polymermischung mit mindestens einer kontinuierlichen und mindestens zwei verschiedenen dispersen Phasen kann durch Mischen von unverträglichen thermoplastischen Polymeren, beispielsweise in einem Extruder, hergestellt werden.

Die erfindungsgemäßen expandierbaren thermoplastischen Polymerpartikel können durch ein Verfahren erhalten werden, bei dem man
a) eine Polymermischungen mit einer kontinuierlichen und mindestens zwei dispersen Phasen durch Mischen der Komponenten A) bis C) und gegebenenfalls E) herstellt,
b) diese Mischungen mit einem Treibmittel D) imprägniert,
c) und zu expandierbaren, thermoplastischen Polymerpartikel durch Unterwassergranulierung bei einem Druck im Bereich von 1,5 bis 10 bar granuliert.

Der mittlere Durchmesser der dispersen Phase der in Stufe a) hergestellten Polymermischung liegt bevorzugt im Bereich von 1 bis 2000 nm, besonders bevorzugt im Bereich von 100 bis 1500 nm.

In einer weiteren Ausführungsform kann in Stufe b) die Polymermischung auch zuerst granuliert und die Granulate anschließend in einer Stufe c) in wässriger Phase unter Druck und erhöhter Temperatur mit einem Treibmittel D) zu expandierbaren thermoplastischen Polymerpartikel nachimprägniert werden. Diese können anschließend nach Abkühlen unter die Schmelzetemperatur der Polymermatrix isoliert oder als vorgeschäumten Schaumstoffpartikeln direkt durch Druckentspannung erhalten werden.

Besonders bevorzugt wird ein kontinuierliches Verfahren, bei dem die Stufe a) ein thermoplastisches, die kontinuierliche Phase bildenden Styrolpolymer A), beispielsweise Polystyrol, in einem Zweiwellen-Extruder aufgeschmolzen und zur Bildung der Polymermischung mit einem die disperse Phase bildenden Polyolefin B1) und B2) sowie den Verträglichkeitsvermittlern C1) und C2) und gegebenenfalls Nukleierungsmittel E) vermischt wird und anschließend die Polymerschmelze in Stufe b) durch eine oder mehrere statische und/oder dynamischen Mischelemente gefördert und mit dem Treibmittel D) imprägniert wird. Die treibmittelbeladene Schmelze kann anschließend durch eine entsprechende Düse zu Schaumstoffplatten, -strängen oder -Partikeln extrudiert und geschnitten werden.

Mittels Unterwassergranulierung (UWG) kann die aus der Düse austretende Schmelze auch direkt zu expandierbaren oder gezielt angeschäumten Polymerpartikeln geschnitten werden. Die Einstellung des geeigneten Gegendrucks und einer geeigneten Temperatur im Wasserbad des UWG ermöglicht somit eine gezielte Herstellung von Schaumstoffpartikeln zu ermöglichen.

Zur Herstellung der expandierbaren Polymerpartikel wird die Unterwassergranulierung in der Regel bei Drücken im Bereich von 1,5 bis 10 bar durchgeführt. Die Düsenplatte weist in der Regel mehrere Nester mit mehreren Löchern. Bei einem Lochdurchmesser im Bereich von 0,2 bis 1 mm erhält man expandierbare Polymerpartikel mit der bevorzugten mittleren Partikeldurchmesser im Bereich von 0,5 bis 1,5 mm.0,8 mm. Expandierbare Polymerpartikel mit enger Partikelgrößenverteilung und einem mittleren Partikeldurchmesser im Bereich von 0,6 bis 0,8 mm führen zu einer besseren Ausfüllung des Formteilautomaten mit filigranere Formteilgestaltung. Des Weiteren wird dadurch eine bessere Formteiloberfläche erreicht mit weniger Zwickelvolumen.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Eine bevorzugte Polymermischungen in Stufe a) wird durch Mischen von
A) 45 bis 89,5 Gewichtsprozent, insbesondere 55 bis 78,1 Gew.-% Styrolpolymeren,
B1) 5 bis 20Gewichtsprozent, insbesondere 7 bis 15 Gew.-% Polyolefins mit einem Schmelzpunkt im Bereich von 105 bis 140°C,
B2) 1 bis 15 Gewichtsprozent, insbesondere 7 bis 15 Gew.-% eines Polyolefins mit einem Schmelzpunkt unter 105°C,
C1) 3 bis 25 Gewichtsprozent, insbesondere 6 bis 15 Gew.-% eines Styrol-Butadien- oder Styrol-Isopren-Blockcopolymeren,
C2) 0,5 bis 5 Gewichtsprozent, insbesondere 0,8 bis 3 Gew.-% eines Styrol-Ethylen-Butylen-Blockcopolymeren,
E) 0 bis 5 Gewichtsprozent, insbesondere 0,1 bis 2Gew.-% eines Nukleierungsmittels,
erhalten und
in Stufe c) mit 1 bis 15 Gew.-%, insbesondere 3 bis 10 Gew.-% eines Treibmittels D) imprägniert, wobei die Summe aus den Komponenten A) bis E) 100 Gew.-% ergibt,

Zur Verbesserung der Verarbeitbarkeit können die fertigen expandierbaren thermoplastischen Polymerpartikel durch Glycerinester, Antistatika oder Antiverklebungsmittel beschichtet werden.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die erfindungsgemäßen expandierbaren, thermoplastischen Polymerpartikel können mittels Heißluft oder Wasserdampf zu Schaumpartikeln mit einer Dichte im Bereich von 8 bis 200 kg/m³, bevorzugt im Bereich von 10 bis 50 kg/m³ vorgeschäumt und anschließend in einer geschlossenen Form zu Schaumstoffformkörpern verschweißt werden. Hierbei wird der Verarbeitungsdruck so niedrig gewählt wird, dass Domänenstruktur in den Zellmembranen erhalten bleibt, zu Partikelschaumstoffformteilen verschweißt. Üblicherweise liegt der Druck im Bereich von 0,5 dies 1,0 bar.

Die so erhältlichen thermoplastischen Partikelschaumstoffe weisen bevorzugt Zellen einer mittleren Zellgröße im Bereich von 50 bis 250 µm und eine faserförmig verstreckte, disperse Phase in den Zellwänden der thermoplastischen Partikelschaumstoffe mit einem mittleren Durchmesser im Bereich von 10 bis 1000 nm, besonders bevorzugt im Bereich von 100 bis 750 nm auf.

Durch die zusätzliche disperse Phase ist es möglich, bei einem höheren Weichphasenanteil die Domänengröße der dispersen Phase < 2 µm zu halten. Dies führt bei gleicher Expandierbarkeit zu einer höheren Biegearbeit im Parikelschaumstoff.

### Beispiele

### Einsatzstoffe:

Komponente A: Polystyrol mit einem Schmelzeviskositätsindex MVI (200°C/5kg) von 2,9 cm3/10 min (PS 158K der BASF SE, Mw = 280.000 g/mol, Viskositätszahl VN 98 ml/g))
Komponente B:
   B1: Polyethylen PE-LLD (LL1201 XV, Exxon Mobile, Dichte 0,925 g/L, MVI = 0,7 g/10 min, Schmelzpunkt 123°C)
   B2: Polyethylen Ethylen-Octen-Copolymer (Exact®, 210 der Fa. ExxonMobile, Dichte 0,902 g/L, MVI = 10 g/10 min, Schmelzpunkt 95°C)
Komponente C:
   C1.1: Styrolux® 3G55, Styrol-Butadien-Blockcopolymer der BASF SE,
   C1.2 Styroflex® 2G66, thermoplastisch elstisches Styrol-Butadien-Blockcopolymer der BASF SE,
   C2.1: Kraton G 1650, Styrol-Ethylen-Butylen-Blockcopolymer der Kraton Polymers LLC
   C2.2 Kraton G 1652, Styrol-Ethylen-Butylen-Blockcopolymer der Kraton Polymers LLC
Komponente D: Treibmittel: (95% iso-Pentan, 5% n-Pentan)
Komponente E: Talkum (HP 320, Omyacarb)

### Beispiele 1 - 6

In einem Zweischneckenextruder der Firma Leitritz ZE 40 wurden die Komponenten A) bis C) bei 240 - 260°C / 140 bar aufgeschmolzen und mit Talkum als Nukleierungsmittel (Komponente E) versetzt (siehe Tabelle 1). Anschließend wurde in die Polymerschmelze das Treibmittel (Komponente D) gedrückt und über zwei statische Mischer homogen in die Polymerschmelze eingearbeitet. Danach wurde über einen Kühler die Temperatur auf 180°-195°C reduziert. Nach weiterer Homogenisierung über zwei weitere statische Mischer, wurde die Polymerschmelze mit 50 kg/h durch eine auf 240 - 260°C temperierte Lochplatte bei 200 - 220 bar gedrückt (0,6 mm Lochdurchmesser mit 7 Nester x 7 Löcher oder 0,4 mm Lochdurchmesser mit 7 Nester x 10 Löcher). Der Polymerstrang wurde mittels Unterwassergranulierung abgeschlagen (11-10 bar Unterwasserdruck bei 40°C-50°C Wassertemperatur), so dass ein treibmittelbeladenes Minigranulat mit enger Teilchengrößenverteilung (d'= 1,2 mm bei 0,65 mm Lochdurchmesser) erhalten wurde.

Das treibmittelhaltige Granulat wurde in einem EPS-Vorschäumer zu Schaumperlen geringer Dichte (15-25 g/L vorgeschäumt) und in einem EPS-Formteilautomaten bei einem Überdruck von 0,9 -1,4 bar zu Formteilen verarbeitet.

An den Formteilen wurden verschiedene mechanische Messungen durchgeführt um die Elastifizierung des Schaumstoffs nachzuweisen.. Bei den erfindungsgemäßen Beispielen wird im Vergleich zum reinen EPS eine deutliche Elastifizierung beobachtet, die an dem sehr hohen Rückstellungvermögen erkennbar ist. Die Druckfestigkeit wurde bei 10% Stauchung nach DIN-EN 826 und die Biegefestigkeit nach DIN-EN 12089 bestimmt. Die Biegearbeit wurde aus den Messwerten zur Biegefestigkeit ermittelt

In der transmissionselektronenmikroskopischen Aufnahme (TEM) ist die disperse Verteilung des Polyethylens (Phase P1 helle Bereiche) und disperse Verteilung des Styrol-Butadien-Blockcopolymer (Phase P2, dunkle Bereiche) im treibmittelhaltigen Minigranulat zu erkennen (Figur 1), die später zur Elastifizierung im Schaum beitragen. Die PE-Domänen des des treibmittelbeladenen Minigranulats liegen dabei in der Größenordnung von 200 bis 1000 nm, die Styrol-Butadien-Blockcopolymer-Domänen in der Größenordnung von 200 bis 1500 nm.

Als Beschichtungskomponenten wurde 70 Gew.-% Gycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil. Die Biegefestigkeit auf 250 bzw. 310 KPa gegenüber 150 kPa der aus den unbeschichteten Granulaten erhaltenen Formteile, erhöht werden.

**Tabelle 1: Zusammensetzung der expandierbaren Polymerpartikel (EPS) in Gewichtsanteilen und Eigenschaften der Schaumstoffformteile**

| | Beispiel | 1 | 2 | 3 | 4 | 5 | 6 |
|---|---|---|---|---|---|---|---|
| Zusammensetzung der expandierbaren Partikel | | | | | | | |
| | Komponente A) | 73,0 | 67,6 | 65,1 | 69,8 | 67,6 | 69,8 |
| | Komponente B1) | 8,1 | 7,5 | 7,2 | 7,7 | 7,5 | 7,7 |
| | Komponente B2) | 5,0 | 4,7 | 8,1 | 8,7 | 4,7 | 8,7 |
| | Komponente C1.1 | | | | | 13,0 | 5,8 |
| | Komponente C1.2 | 6,0 | 13,0 | 12,6 | 5,8 | | |
| | Komponente C2.1 | | | | | 0,7 | 1,3 |
| | Komponente C2.2 | 0,8 | 0,7 | 0,7 | 1,3 | | |
| | Komponente D | 6,5 | 6,1 | 5,8 | 6,3 | 6,1 | 6,3 |
| | Komponente E) | 0,5 | 0,5 | 0,4 | 0,5 | 0,5 | 0,5 |

| Eigenschaften des Schaumstoffformteils | | | | | | | |
|---|---|---|---|---|---|---|---|
| | Schaumstoffdichte [g/L] | 19,3 | 19,4 | 19,5 | 19,5 | 21,3 | 21,6 |
| | Druckfestigkeit 10% [kPa] | 97 | 96 | 86 | 94 | 95 | 94 |
| | Biegefestigkeit [kPa] | 282 | 286 | 240 | 282 | 278 | 280 |
| | Biegearbeit [Nm] | 4,8 | 5,8 | 5,1 | 5,5 | 5,7 | 5,4 |

## Patentansprüche

1. Expandierbare, thermoplastische Polymerpartikel bestehend aus einer mehrphasigen treibmittelhaltigen Polymermischung mit mindestens einer kontinuierlichen Phase eines thermoplastischen Polymeren, **dadurch gekennzeichnet, dass** mindestens zwei verschiedene disperse Phasen P1 und P2 verteilt in der kontinuierlichen Phase vorliegen.

2. Expandierbare, thermoplastische Polymerpartikel nach Anspruch 1, **dadurch gekennzeichnet, dass** der mittlere Durchmesser der dispersen Phasen der Polymermischung im Bereich von 1 bis 2000 nm liegen.

3. Expandierbare, thermoplastische Polymerpartikel nach Anspruch 1 oder 2, **dadurch gekennzeichnet, dass**
a) die kontinuierliche Phase im wesentlichen aus Styolpolymeren,
b) die erste disperse Phase P1 im wesentlichen aus Polyolefinen und
c) die zweite disperse Phase P2 im wesentlichen aus einem Styrol-Butadien- oder Styrol-Isopren-Blockcopolymeren, einem thermoplastischen Polyurethan (TPU), einem Polystyrol-gepfropften Butadienpolymeren oder einem Kem-Schale-Teilchen mit einer Styrolpolymer-Schale bestehen.

4. Expandierbare, thermoplastische Polymerpartikel, enthaltend
A) 45 bis 89,5 Gewichtsprozent eines Styrolpolymeren,
B1) 5 bis 20 Gewichtsprozent eines Polyolefins mit einem Schmelzpunkt im Bereich von 105 bis 140°C,
B2) 1 bis 15 Gewichtsprozent eines Polyolefins mit einem Schmelzpunkt unter 105°C,
C1) 3 bis 25 Gewichtsprozent eines Styrol-Butadien- oder Styrol-Isopren-Blockcopolymeren,
C2) 0,5 bis 5 Gewichtsprozent eines Styrol-Ethylen-Butylen-Blockcopolymeren,
D) 1 bis 15 Gewichtsprozent eines Treibmittels,
E) 0 bis 5 Gewichtsprozent eines Nukleierungsmittels
wobei die Summe aus den Komponenten A) bis E) 100 Gew.-% ergibt, **dadurch gekennzeichnet, dass** die Summe der Komponenten C1) und C2) im Bereich von 3,5 bis 30 Gewichtsprozent liegt.

5. Expandierbare, thermoplastische Polymerpartikel nach Anspruch 4, **dadurch gekennzeichnet, dass** sie
A) 55 bis 78,1 Gewichtsprozent eines Styrolpolymeren,
B1) 7 bis 15 Gewichtsprozent eines Polyolefins mit einem Schmelzpunkt im Bereich von 105 bis 140°C,
B2) 5 bis 10 Gewichtsprozent eines Polyolefins mit einem Schmelzpunkt unter 105°C,
C1) 6 bis 15 Gewichtsprozent eines Styrol-Butadien- oder Styrol-Isopren-Blockcopolymeren,
C2) 0,8 bis 3 Gewichtsprozent eines Styrol-Ethylen-Butylen-Blockcopolymeren,
D) 3 bis 10 Gewichtsprozent eines Treibmittels,
E) 0,1 bis 2 Gewichtsprozent eines Nukleierungsmittels
enthaltend, wobei die Summe aus den Anteilen der Komponenten A) bis E) 100 Gew.-% ergibt und die Summe der Anteile der Komponenten C1) und C2) im Bereich von 6,8 bis 18 Gewichtsprozent liegt.

6. Expandierbare, thermoplastische Polymerpartikel nach Anspruch 4, **dadurch gekennzeichnet, dass** das Gewichtsverhältnis der Summe aus den Komponenten B1) und B) zu C2 im Bereich von 5 bis 70 beträgt.

7. Expandierbare, thermoplastische Polymerpartikel nach Anspruch 4, **dadurch gekennzeichnet, dass** das Gewichtsverhältnis Komponenten C1 zu C2 im Bereich von 2 bis 5 liegt.

8. Expandierbare, thermoplastische Polymerpartikel nach einem der Ansprüche 4 bis 7, **dadurch gekennzeichnet, dass** sie als Styrolpolymer A) Standard-Polystyrol (GPPS) enthalten.

9. Expandierbare, thermoplastische Polymerpartikel nach einem der Ansprüche 4 bis 8, **dadurch gekennzeichnet, dass** sie als Polyolefin B1) Polyethylen enthalten.

10. Expandierbare, thermoplastische Polymerpartikel nach einem der Ansprüche 4 bis 8, **dadurch gekennzeichnet, dass** sie als Polyolefin B2) ein Copolymer aus Ethylen und Octen enthalten.

11. Expandierbare, thermoplastische Polymerpartikel nach einem der Ansprüche 4 bis 10, **dadurch gekennzeichnet, dass** sie aus einer mehrphasigen treibmittelhaltigen Polymermischung mit mindestens einer kontinuierlichen Phase und mindestens zwei in der kontinuierlichen Phase verteilten dispersen Phasen P1 und P2 bestehen, wobei
a) die kontinuierliche Phase im wesentlichen aus der Komponenten A,
b) die erste disperse Phase P1 im wesentlichen aus den Komponenten B1 und B2 und
c) die zweite disperse Phase P2 im wesentlichen aus der Komponente C1 bestehen.

12. Expandierbare, thermoplastische Polymerpartikel nach Anspruch 11, **dadurch gekennzeichnet, dass** die Komponenten C2 eine Phasengrenzfläche zwischen der dispersen Phase P1 und der kontinuierlichen Phase bildet.

13. Expandierbare, thermoplastische Polymerpartikel nach einem der Ansprüche 1 bis 13, **dadurch gekennzeichnet, dass** sie eine Beschichtung, enthaltend ein Glycerinstearat, aufweisen.

14. Verfahren zur Herstellung von expandierbaren, thermoplastischen Polymerpartikeln nach einem der Ansprüche 4 bis 13, **dadurch gekennzeichnet, dass** man
a) eine Polymerschmelze mit einer kontinuierlichen und mindestens zwei dispersen Phasen P1 und P2 durch Mischen der Komponenten A) bis C) und gegebenenfalls E) herstellt,
b) diese Polymerschmelze mit einem Treibmittel D) imprägniert,
c) und zu expandierbaren thermoplastischen Polymerpartikel durch Unterwassergranulierung bei einem Druck von 1,5 bis 10 bar granuliert.

15. Verfahren zur Herstellung von expandierbaren, thermoplastischen Polymerpartikeln nach einem der Ansprüche 4 bis 13, **dadurch gekennzeichnete**n, dass man
a) eine Polymerschmelze mit einer kontinuierlichen und mindestens zwei dispersen Phase P1 und P2 durch Mischen der Komponenten A) bis C) und gegebenenfalls E) hergestellt,
b) diese Polymerschmelze granuliert und
c) in wässriger Phase unter Druck und erhöhter Temperatur mit einem Treibmittel D) zu expandierbaren thermoplastischen Polymerpartikel nachimprägniert.

16. Verfahren nach einem der Ansprüche 14 oder 15, **dadurch gekennzeichnet, dass** in Stufe b) 1 bis 10 Gewichtsprozent, bezogen auf die Polymermischung, eines C₃ bis C₈-Kohlenwasserstoffes als Treibmittel eingesetzt wird.

## Claims

1. An expandable, thermoplastic polymer bead material composed of a multiphase polymer mixture which comprises blowing agent and has at least one continuous phase of a thermoplastic polymer, wherein at least two different disperse phases P1 and P2 are present, dispersed in the continuous phase.

2. The expandable, thermoplastic polymer bead material according to claims 1,
wherein the average diameter of the disperse phases of the polymer mixture is in the range from 1 to 2000 nm.

3. The expandable, thermoplastic polymer bead material according to claim 1 or 2,
wherein
a) the continuous phase consists essentially of styrene polymers,
b) the first disperse phase P1 consists essentially of polyolefins, and
c) the second disperse phase P2 consists essentially of a styrene-butadiene or styrene-isoprene block copolymer, of a thermoplastic polyurethane (TPU), of a polystyrene-grafted butadiene polymer, or of a core-shell particle, having a styrene polymer shell.

4. An expandable, thermoplastic polymer bead material, comprising
A) from 45 to 89.5 percent by weight of a styrene polymer,
B1) from 5 to 20 percent by weight of a polyolefin with a melting point in the range from 105 to 140°C,
B2) from 1 to 15 percent by weight of a polyolefin with a melting point below 105°C,
C1) from 3 to 25 percent by weight of a styrene-butadiene or styrene-isoprene block copolymer,
C2) from 0.5 to 5 percent by weight of a styrene-ethylene-butylene block copolymer,
D) from 1 to 15 percent by weight of a blowing agent, and
E) from 0 to 5 percent by weight of a nucleating agent,
where the entirety composed of the components A) to E) gives 100% by weight wherein the entirety of components C1) and C2) lies within the range from 3.5 to 30 percent by weight.

5. The expandable, thermoplastic polymer bead material according to claim 4, which comprises
A) from 55 to 78.1 percent by weight of a styrene polymer,
B1) from 7 to 15 percent by weight of a polyolefin with a melting point in the range from 105 to 140°C,
B2) from 5 to 10 percent by weight of a polyolefin with a melting point below 105°C.
C1) from 6 to 15 percent by weight of a styrene-butadiene or styrene-isoprene block copolymer,
C2) from 0.8 to 3 percent by weight of a styrene-ethylene-butylene block copolymer,
D) from 3 to 10 percent by weight of a blowing agent, and
E) from 0.1 to 2 percent by weight of a nucleating agent,
where the entirety composed of the amounts of the components A) to E) gives 100% by weight and the entirety composed of the amounts of the components C1) and C2) lies within the range from 6.8 to 18 percent by weight.

6. The expandable, thermoplastic polymer bead material according to claim 4,
wherein the ratio by weight of the entirety of components B1) and B2) to C2) is in the range from 5 to 70.

7. The expandable, thermoplastic polymer bead material according to claims 4,
wherein the ratio by weight of components C1):C2) is in the range from 2 to 5.

8. The expandable, thermoplastic polymer bead material according to any of claims 4 or 7, which comprises, as styrene polymer A), standard polystyrene (GPPS).

9. The expandable, thermoplastic polymer bead material according to any of claims 4 to 8, which comprises, as polyolefin B1), polyethylene.

10. The expandable, thermoplastic polymer bead material according to any of claims 4 to 8, which comprises, as polyolefin B2), a copolymer composed of ethylene and octene.

11. The expandable, thermoplastic polymer bead material according to any of claims 4 to 10, which is composed of a multiphase polymer mixture which comprises blowing agent and has at least one continuous phase and has at least two disperse phases P1 and P2 dispersed in the continuous phase, where
a) the continuous phase consists essentially of component A,
b) the first disperse phase P1 consists essentially of components B1 and B2, and
c) the second disperse phase P2 consists essentially of component C1.

12. The expandable, thermoplastic polymer bead material according to claim 11,
wherein the component C2 forms an interface between the disperse phase P1 and the continuous phase.

13. The expandable, thermoplastic polymer bead material according to any of claims 1 to 13, which has a coating, comprising a glycerol stearate.

14. A process for the production of expandable, thermoplastic polymer bead material according to any of claims 4 to 13, which comprises
a) producing a polymer melt with a continuous and at least two disperse phases P1 and P2 via mixing of components A) to C) and optionally E),
b) impregnating this polymer melt with a blowing agent D), and
c) pelletizing via underwater pelletization at a pressure of from 1.5 to 10 bar, to give expandable thermoplastic polymer bead material.

15. A process for the production of expandable, thermoplastic polymer bead material according to any of claims 4 to 13, which comprises
a) producing a polymer melt with a continuous and at least two disperse phases P1 and P2 via mixing of components A) to C) and optionally E),
b) pelletizing this polymer melt and
c) post-impregnating it in an aqueous phase under pressure and at an elevated temperature with a blowing agent D) to give expandable thermoplastic polymer bead material.

16. The process according to either of claims 14 or 15, wherein, in stage b), the amount used of a C₃ - C₈ hydrocarbon as blowing agent is from 1 to 10 percent by weight, based on the polymer mixture.

## Revendications

1. Particules polymères thermoplastiques expansibles constituées d'un mélange polymère polyphasé contenant un agent gonflant qui comprend au moins une phase continue d'un polymère thermoplastique, **caractérisées en ce qu'**au moins deux phases dispersées différentes P1 et P2 sont réparties dans la phase continue.

2. Particules polymères thermoplastiques expansibles selon la revendication 1, **caractérisées en ce que** les diamètres moyens des phases dispersées du mélange polymère se situent dans la plage allant de 1 à 2 000 nm.

3. Particules polymères thermoplastiques expansibles selon la revendication 1 ou 2, **caractérisées en ce que**
a) la phase continue est essentiellement constituée de polymères de styrène,
b) la première phase dispersée P1 est essentiellement constituée de polyoléfines, et
c) la seconde phase dispersée P2 est essentiellement constituée d'un copolymère séquence styrène-butadiène ou styrène-isoprène, d'un polyuréthane thermoplastique (TPU), d'un polymère de butadiène greffé avec du polystyrène ou d'une particule noyau-enveloppe comprenant une enveloppe en un polymère de styrène.

4. Particules polymères thermoplastiques expansibles, contenant
A) 45 à 89,5 pourcent en poids d'un polymère de styrène,
B1) 5 à 20 pourcent en poids d'une polyoléfine ayant un point de fusion dans la plage allant de 105 à 140 °C,
B2) 1 à 15 pourcent en poids d'une polyoléfine ayant un point de fusion inférieur à 105 °C,
C1) 3 à 25 pourcent en poids d'un copolymère séquencé styrène-butadiène ou styrène-isoprène,
C2) 0,5 à 5 pourcent en poids d'un copolymère séquencé styrène-éthylène-butylène,
D) 1 à 15 pourcent en poids d'un agent gonflant,
E) 0 à 5 pourcent en poids d'un agent de nucléation,
la somme des composants A) à E) étant de 100 % en poids, **caractérisées en ce que** la somme des composants C1) et C2) se trouve dans la plage allant de 3,5 à 30 pourcent en poids.

5. Particules polymères thermoplastiques expansibles selon la revendication 4, **caractérisées en ce qu'**elles contiennent
A) 55 à 78,1 pourcent en poids d'un polymère de styrène,
B1) 7 à 15 pourcent en poids d'une polyoléfine ayant un point de fusion dans la plage allant de 105 à 140 °C,
B2) 5 à 10 pourcent en poids d'une polyoléfine ayant un point de fusion inférieur à 105 °C,
C1) 6 à 15 pourcent en poids d'un copolymère séquencé styrène-butadiène ou styrène-isoprène,
C2) 0,8 à 3 pourcent en poids d'un copolymère séquencé styrène-éthylène-butylène,
D) 3 à 10 pourcent en poids d'un agent gonflant,
E) 0,1 à 2 pourcent en poids d'un agent de nucléation,
la somme des proportions des composants A) à E) étant de 100 % en poids et la somme des proportions des composants C1) et C2) se trouvant dans la plage allant de 6,8 à 18 pourcent en poids.

6. Particules polymères thermoplastiques expansibles selon la revendication 4, **caractérisées en ce que** le rapport en poids entre la somme des composants B1) et B2) et C2 se trouve dans la plage allant de 5 à 70.

7. Particules polymères thermoplastiques expansibles selon la revendication 4, **caractérisées en ce que** le rapport en poids entre les composants C1 et C2 se trouve dans la plage allant de 2 à 5.

8. Particules polymères thermoplastiques expansibles selon l'une quelconque des revendications 4 à 7, **caractérisées en ce qu'**elles contiennent du polystyrène standard (GPPS) en tant que polymère de styrène A).

9. Particules polymères thermoplastiques expansibles selon l'une quelconque des revendications 4 à 8, **caractérisées en ce qu'**elles contiennent du polyéthylène en tant que polyoléfine B1).

10. Particules polymères thermoplastiques expansibles selon l'une quelconque des revendications 4 à 8, **caractérisées en ce qu'**elles contiennent un copolymère d'éthylène et d'octène en tant que polyoléfine B2).

11. Particules polymères thermoplastiques expansibles selon l'une quelconque des revendications 4 à 10, **caractérisées en ce qu'**elles sont constituées d'un mélange polymère polyphasé contenant un agent gonflant qui comprend au moins une phase continue et au moins deux phases dispersées P1 et P2 réparties dans la phase continue,
a) la phase continue étant essentiellement constituée du composant A,
b) la première phase dispersée P1 étant essentiellement constituée des composants B1 et B2, et
c) la seconde phase dispersée P2 étant essentiellement constituée du composant C1.

12. Particules polymères thermoplastiques expansibles selon la revendication 11, **caractérisées en ce que** le composant C2 forme une interface entre la phase dispersée P1 et la phase continue.

13. Particules polymères thermoplastiques expansibles selon l'une quelconque des revendications 1 à 13, **caractérisées en ce qu'**elles comprennent un revêtement contenant un stéarate de glycérine.

14. Procédé de fabrication de particules polymères thermoplastiques expansibles selon l'une quelconque des revendications 4 à 13, **caractérisé en ce que**
a) une masse fondue polymère comprenant une phase continue et au moins deux phases dispersées P1 et P2 est fabriquée par mélange des composants A) à C) et éventuellement E),
b) cette masse fondue polymère est imprégnée avec un agent gonflant D),
c) et granulée pour former des particules polymères thermoplastiques expansibles par granulation sous eau à une pression de 1,5 à 10 bar.

15. Procédé de fabrication de particules polymères thermoplastiques expansibles selon l'une quelconque des revendications 4 à 13, **caractérisées en ce que**
a) une masse fondue polymère comprenant une phase continue et au moins deux phases dispersées P1 et P2 est fabriquée par mélange des composants A) à C) et éventuellement E),
b) cette masse fondue polymère est granulée et
c) imprégnée avec un agent gonflant D) en phase aqueuse sous pression et température élevée pour former des particules polymères thermoplastiques expansibles.

16. Procédé selon l'une quelconque des revendications 14 ou 15, **caractérisé en ce que** 1 à 10 pourcent en poids, par rapport au mélange polymère, d'un hydrocarbure en C₃ à C₈ est utilisé à l'étape b) en tant qu'agent gonflant.
